Europäisches Patentamt

European Patent Office

Office européen des brevets

(19)

(11) Numéro de publication : **0 350 399 B1**

(12)

# FASCICULE DE BREVET EUROPEEN

(45) Date de publication du fascicule du brevet :
**24.06.92 Bulletin 92/26**

(51) Int. Cl.$^5$ : **A22C 21/00**

(21) Numéro de dépôt : **89401929.8**

(22) Date de dépôt : **05.07.89**

(54) Procédé et installation pour la conformation des ailes de volailles.

(30) Priorité : **06.07.88 FR 8809175**

(43) Date de publication de la demande :
**10.01.90 Bulletin 90/02**

(45) Mention de la délivrance du brevet :
**24.06.92 Bulletin 92/26**

(84) Etats contractants désignés :
**AT BE CH DE ES FR GB GR IT LI LU NL SE**

(56) Documents cités :
**FR-A- 2 485 336
FR-A- 2 522 475
US-A- 2 560 067
US-A- 4 074 389
US-A- 4 339 847**

(73) Titulaire : **ARRIVE S.A.
B.P. no. 1
F-85250 Saint-Fulgent (FR)**
Titulaire : **UNIGRAINS-UNION FINANCIERE
POUR LE DEVELOPPEMENT DE L'ECONOMIE
CEREALIERE
8, Avenue Président Wilson
F-75116 Paris (FR)**

(72) Inventeur : **Villemin, Daniel
19, Rue Condorcet Z.I.
F-94430 Chennevières (FR)**
Inventeur : **Romand, Paul
La Batie Besayes
F-26300 Bourg-de Péage (FR)**
Inventeur : **Plusa, Janusz
148, rue de Verdun
F-94500 Champigny-sur-Marne (FR)**

(74) Mandataire : **Casalonga, Axel et al
BUREAU D.A. CASALONGA - JOSSE
Morassistrasse 8
W-8000 München 5 (DE)**

EP 0 350 399 B1

Jouve, 18, rue Saint-Denis, 75001 PARIS

## Description

La présente invention se rapporte à un procédé et à une installation pour la conformation des ailes de volailles, notamment de poulets, après abattage, plumage et éviscèration, consistant à tordre et plier les ailes pour les amener et les bloquer sur le dos des volailles.

Pour la vente de volailles prêtes à cuire, rotir ou griller en entier, on présente généralement les volailles conformées et bridées. La conformation comprend la conformation des ailes, c'est-à-dire la torsion et le pliage des ailes et leur blocage sur le dos, ainsi que la conformation des pattes, c'est-à-dire le pliage des pattes et éventuellement l'introduction des métatarses dans la cavité abdominale. Le bridage consiste à fixer en position les ailes et surtout les pattes, après conformation, à l'aide d'un lien, par exemple d'un bracelet élastique.

Jusqu'à présent, ces opérations sont effectuées manuellement.

Il a déjà été proposé, par exemple par les demandes de brevets français n° 2 485 336 et 2 522 475, d'automatiser la conformation et le bridage de volailles, mais les dispositifs proposés par ces demandes n'effectuent que la conformation des pattes et non pas la conformation des ailes. Par ailleurs, la conformation de volailles sur ces dispositifs implique que les volailles soient installées ou déposées sur les dispositifs en question, ce qui nécessite, sur une chaîne d'abattage et d'éviscération sur laquelle toutes les opérations s'effectuent sur les volailles suspendues par les pattes à un transporteur, le transfert des volailles de ce transporteur sur le dispositif de conformation et de bridage.

La présente invention vise à automatiser la conformation des ailes de volailles et a pour objet un procédé et une installation permettant de conformer les ailes de volailles directement à la sortie d'une chaîne d'abattage et d'éviscération, sans aucune intervention manuelle et sans aucun transfert des volailles du transporteur d'évacuation de la chaîne à l'installation de conformation des ailes. L'invention a également pour objet une installation de conformation de structure simple et fiable et de rendement élevé. L'invention a par ailleurs pour objet une installation de conformation permettant de passer de façon simple et très rapidement au traitement de volailles de tailles différentes.

Il convient de noter que dans la suite, chaque aile de volaille doit être considérée comme comprenant une partie proximale, une partie distale et un aileron, la partie proximale étant la partie correspondant à l'humérus, la partie distale la partie correspondant au radius et au cubitus et l'aileron la partie correspondant au métacarpe et aux phalangues.

Suivant le procédé conforme à l'invention de conformation des ailes de volailles après abattage, plumage et éviscération, consistant à tordre et plier les ailes pour les amener et les bloquer sur le dos des volailles, on amène chaque volaille suspendue par les pattes, les ailes libres étant naturellement écartées du corps, au-dessus de deux éléments de conformation sensiblement parallèles, espacés horizontalement, formés chacun d'une tige sensiblement horizontale munie d'une partie coudée à son extrémité libre, de telle manière que la partie proximale de chaque aile vienne se placer sur la tige, en arrière de l'extrémité libre coudée qui dépasse vers le côté ventral de la volaille en étant tourné vers le haut. On imprime ensuite aux éléments de conformation un mouvement combiné de translation suivant les axes des tiges depuis le côté ventral vers le côté dorsal de la volaille et de rotation d'au moins 360° des extrémités coudées vers l'extérieur autour des axes des tiges tout en maintenant le corps de la volaille en position par application dorsale du corps contre un appui, de manière que les extrémités coudées des tiges saisissent les parties distales des ailes et fassent subir aux ailes un mouvement combiné de torsion et pliage et de recul pour les amener et les bloquer sur le dos de la volaille.

Afin d'éviter que les deux ailes se gênent l'une l'autre lors de ce mouvement de pliage sur le dos, il est avantageux de décaler les extrémités libres coudées des tiges des deux éléments de conformation angulairement l'une par rapport à l'autre autour des axes des tiges, de manière que l'extrémité libre coudée de l'une des tiges soit toujours légèrement en avance sur l'autre dans son mouvement de rotation.

Pour dégager les extrémités libres coudées des deux éléments de conformation des ailes bloquées sur le dos de la volaille, il est avantageux d'imprimer aux éléments de conformation, à la suite du mouvement de rotation d'environ 360°, un mouvement de rotation supplémentaire d'environ 90°.

L'installation suivant l'invention de conformation des ailes de volailles après abattage, plumage et éviscération comprend, associée à un transporteur auquel les volailles à conformer sont suspendues par les pattes, au moins une unité de conformation comprenant :

– un appui dorsal pour une volaille à conformer,
– deux éléments de conformation espacés horizontalement, formés chacun d'une tige sensiblement horizontale munie d'une partie coudée à son extrémité libre, lesdits deux éléments de conformation étant situés de part et d'autre et en dessous dudit appui dorsal,
– des moyens de commande pour animer lesdits éléments de conformation d'un mouvement de translation suivant l'axe de leur tige entre une position avant dans laquelle les extrémités coudées se trouvent à distance en avant de l'appui dorsal et une position arrière dans laquelle les extrémités coudées se trouvent sensiblement en dessous de l'appui dorsal, et

– des moyens de commande pour imprimer auxdits deux éléments de conformation, en superposition au mouvement de translation, un mouvement de rotation en sens opposés autour des axes des tiges sur un angle d'au moins 360° de manière que les extrémités coudées des tiges s'écartent l'une de l'autre au-dessus des axes des tiges et se rapprochent l'une de l'autre en dessous des axes des tiges.

La ou chaque unité de conformation est avantageusement montée mobile en synchronisme avec le transporteur auquel sont suspendues les volailles.

De préférence, plusieurs unités de conformation sont montées sur un carrousel, les axes des tiges des éléments de conformation étant orientés radialement, et le transporteur auquel sont suspendues les volailles suit un trajet en arc de cercle à l'endroit dudit carrousel.

Les volailles sont avantageusement suspendues de façon connue en soi au transporteur par des balancelles ou étriers. Pour permettre l'adaptation de chaque unité de conformation à la taille des volailles, la ou chaque unité de conformation peut comprendre des moyens de commande réglables pour soulever la balancelle de la volaille à conformer de manière à amener la volaille à la hauteur correcte par rapport à l'appui dorsal et aux éléments de conformation.

De préférence, les éléments de conformation sont montés mobiles en hauteur et la ou chaque unité de conformation comprend des moyens de commande pour soulever ses éléments de conformation après mise en place d'une volaille contre l'appui dorsal et pour abaisser les éléments de conformation après conformation de cette volaille, avant la mise en place de la volaille suivante.

Suivant un mode de réalisation préféré, les éléments de conformation de chaque unité sont disposés sur une tête montée pivotante autour d'un axe horizontal perpendiculaire aux axes des tiges des éléments de conformation, et des moyens de commande sont prévus pour faire pivoter la tête en va-et-vient autour dudit axe en vue d'abaisser et de soulever les éléments de conformation.

Suivant un mode de réalisation particulièrement simple, les moyens de commande de l'ensemble des mouvements sont constitués par des cames fixes et par des éléments suiveurs de cames montés sur les éléments à commander.

En se référant aux dessins annexés, on va décrire ci-après plus en détail un mode de réalisation illustratif et non limitatif de l'invention; sur les dessins :

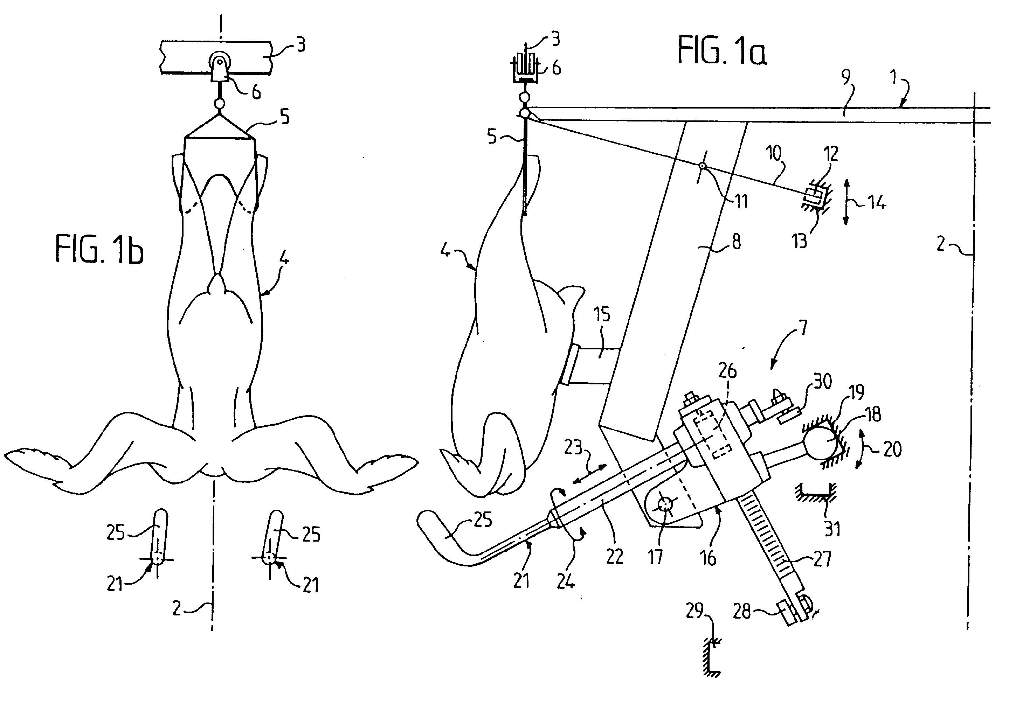

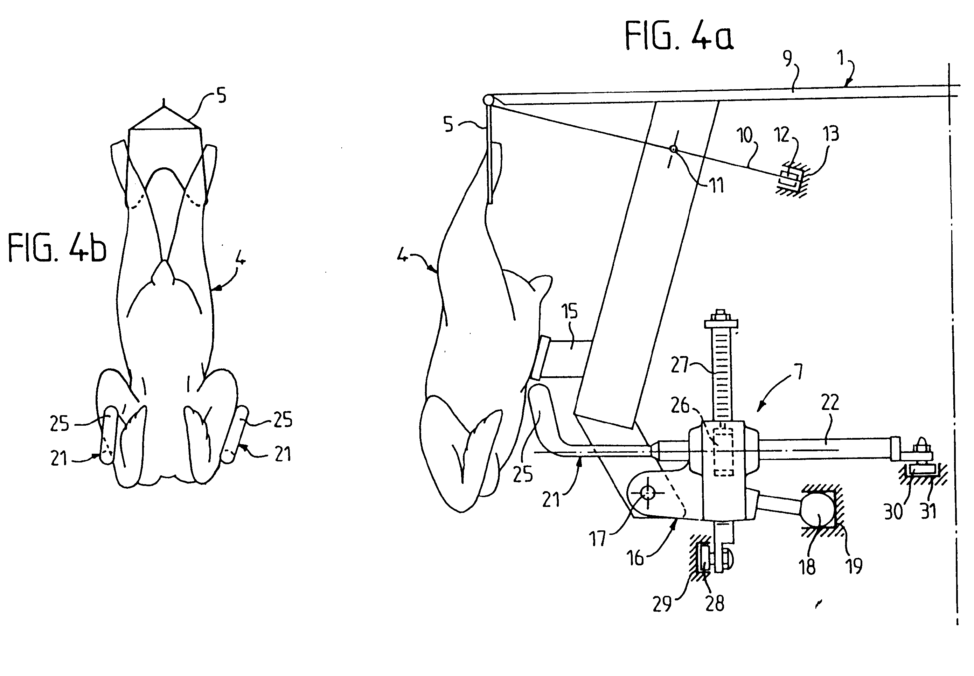

les figures 1a, 1b à 4a, 4b montrent schématiquement, en vue latérale et en vue arrière, respectivement, les différentes phases de l'opération de conformation des ailes, ainsi que les moyens pour la mise en oeuvre de cette opération.

Selon les figures 1a et 1b, un carrousel 1 dont l'axe de rotation vertical est référencé 2 est raccordé tangentiellement au trajet d'un transporteur aérien 3 véhiculant les volailles à conformer. Chaque volaille 4 à conformer est suspendue par ses pattes à une balancelle (étrier) 5 elle-même suspendue à un chariot 6 roulant sur le transporteur 3.

A l'endroit du carrousel 1, le transporteur 3 avec les volailles 4 suspendues suit un trajet en arc de cercle, par exemple sur 180°.

Le carrousel 1 porte un certain nombre d'unités de conformation 7 dont une seule est représentée, les unités de conformation 7 étant uniformément réparties sur le pourtour avec un pas correspondant au pas des chariots 6 sur le transporteur 3.

Chaque unité de conformation 7 comprend un support 8 s'étendant vers le bas à partir du plateau supérieur 9 du carrousel 1. Un levier 10 sensiblement radial est articulé par un axe horizontal 11 sur la partie supérieure du support 8. L'extrémité radialement intérieure du levier 10 porte un galet suiveur de came 12 qui se trouve dans une rainure de came 13 fixe, réglable en hauteur comme indiqué par une double flèche 14. L'extrémité extérieure du levier 10 est destinée à coopérer avec la partie supérieure de la balancelle 5 de manière à soulever cette dernière plus ou moins en fonction de la position en hauteur de la rainure de came 13.

A la partie inférieure, le support 8 porte un appui 15 tourné radialement vers l'extérieur. L'appui 15 est disposé de manière que la volaille 4 suspendue à la balancelle 5 vienne porter par sa partie dorsale contre l'appui 15.

Une tête de conformation 16 est articulée par un axe horizontal 17 sur l'extrémité inférieure du support 8, la tête 16 étant disposée radialement vers l'intérieur par rapport à l'appui 15. Une sphère 18 suiveuse de came engagée avec une rainure de came 19 fixe est reliée rigidement à la tête 16 de manière à faire basculer la tête 16 autour de l'axe 17, comme indiqué par une flèche double 20, en fonction de la position en hauteur de la rainure de came 19.

Deux éléments de conformation 21 comprenant essentiellement une partie 22 en forme de tige sont montés mobiles en translation suivant leurs axes (flèche double 23) et en rotation (flèche double 24) dans la tête 16 de manière à s'étendre parallèlement l'une à l'autre, radialement vers l'extérieur à partir de la tête 16, à distance en dessous de l'appui 15. A son extrémité radialement extérieure, chaque élément de conformation 21 comporte une partie coudée 25, ce qui donne à l'élément de conformation 21 la forme générale d'un club de golf.

La tige 22 de chaque élément de conformation 21 traverse un pignon 26 monté à l'intérieur de la tête 16, la tige 22 étant mobile en translation mais immobilisée en rotation par rapport au pignon 26, par exemple grâce à des cannelures ou un autre système analogue, non représenté. Les deux pignons 26 traversés par les tiges 22 des deux éléments de conformation 21 ne sont pas en prise directe l'un avec l'autre, mais en prise avec les dents prévues sur les deux faces opposées d'une crémaillère 27 montée mobile en translation verticale dans la tête 16 et portant à son extrémité inférieure un galet suiveur de came 28 destiné à coopérer avec une rainure de came 29 fixe.

A leur extrémité radialement intérieure, les deux éléments de conformation 21 sont couplés par une traverse qui porte un galet suiveur de came 30 destiné à coopérer avec une rainure de came 31 fixe.

L'unité de conformation telle que décrite ci-dessus est représentée sur les figures 1a et 1b en position inactive, c'est-à-dire dans la position dans laquelle la volaille 4 est amenée en position sur l'unité de conformation, avant l'entrée en action de cette dernière. On reconnaît sur la figure 1a que dans cette position, la tête 16 se trouve basculée, sous l'action de la came 19 et de la sphère suiveuse de came 18, dans le sens contraire des aiguilles d'une montre (flèche 20) autour de l'axe 17 de manière que les éléments de conformation 21 amenés auparavant par les galets suiveurs de came 28 et 30 à la position de translation radialement extérieure et à une position angulaire dans laquelle les extrémités coudées 25 des éléments de conformation 21 sont sensiblement orientées vers le haut, sont inclinés dans leur ensemble vers le bas et vers l'extérieur. Dans cette position, les éléments de conformation 21 ne gênent pas la mise en position de la volaille 4 suspendue à la balancelle 6 roulant sur le transporteur 3 devant l'unité de conformation 7 de manière que la volaille porte par le dos contre l'appui 15, la position en hauteur de la volaille, compte tenu de la taille de cette dernière, étant réglée automatiquement, par l'intermédiaire du levier 10 commandé par la came 13.

Dans cette position de basculement de la tête 16, les galets suiveurs de came 28 et 30 ne sont pas en prise avec les rainures de came 29 et 31.

On reconnaît par ailleurs sur la figure 1b que les deux éléments de conformation 21 n'occupent pas une position parfaitement symétrique par rapport à un plan vertical passant par l'axe de rotation 2 du carrousel 1. En effet, alors que l'extrémité coudée 25 de l'élément de conformation 21 de gauche est verticale, l'extrémité coudée 25 de l'élément de conformation 21 de droite est légèrement inclinée vers l'extérieur par rapport à ce plan vertical.

Après cette phase de mise en position de la volaille 4, la rotation du carrousel 1 autour de l'axe 2 entraîne le basculement de la tête 16 de manière que les tiges 22 des éléments de conformation 21 soient orientées horizontalement, cela grâce au suiveur de came 18 en prise avec la rainure de came 19 ayant ici un tracé descendant. Par ce basculement de la tête 16, les galets suiveurs de came 28 et sont simultanément amenés en prise avec les rainures de came 29 et 31.

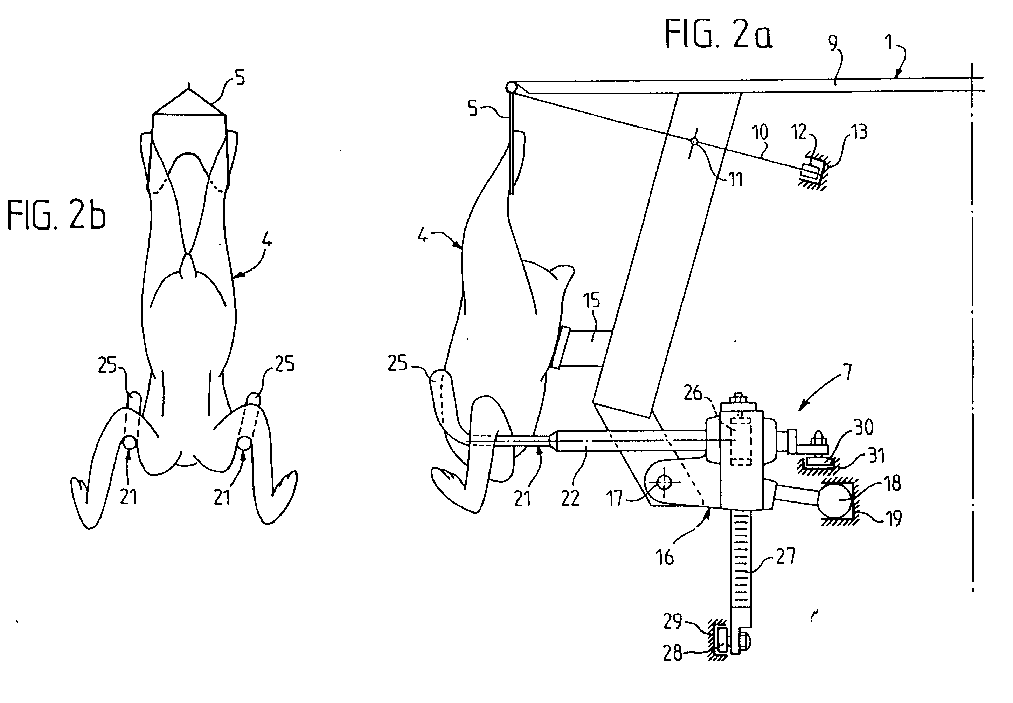

Grâce à ce mouvement de basculement de la tête 16, les éléments de conformation 21 sont soulevés par rapport à la volaille 4 et viennent se placer sous les parties proximales des ailes de la volaille, comme représenté sur les figures 2a et 2b.

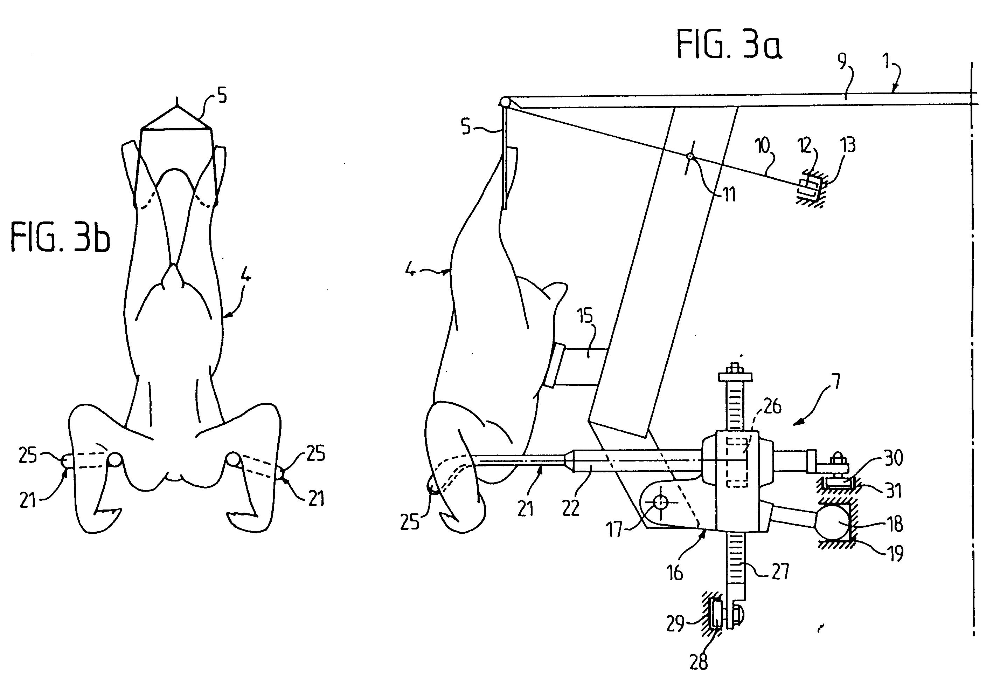

Les figures 3a et 3b illustrent une phase intermédiaire de l'opération de conformation, à la suite d'une rotation supplémentaire du carrousel 1. Dans cette position, les éléments de conformation 22 ont subi, par rapport à la position des figures 2a et 2b, un mouvement de translation radialement vers l'intérieur et un mouvement de rotation en sens opposé d'environ 90° dans le sens d'un éloignement des extrémités coudées 25 l'une de l'autre (voir figure 3b). Ce mouvement de translation est produit par le tracé de la rainure de came 31 qui entraîne une translation des éléments de conformation 21 vers la droite sur la figure 2a, tandis que le mouvement de rotation est produit par le tracé de la rainure de came 29 qui entraîne une montée de la crémaillère 27.

Par ce mouvement combiné de translation et de rotation des éléments de conformation 21, les extrémités coudées 25 de ces derniers agissent sur les parties distales et les ailerons des ailes de manière à tordre les ailes et les amener vers le côté dorsal au fur et à mesure de la rotation et de la translation des éléments de conformation 21. Le corps de la volaille 4 est maintenu en position par application dorsale contre l'appui fixe 15, de sorte que seules les ailes participent à ce mouvement vers le côté dorsal.

Ce mouvement combiné de translation vers le côté dorsal et de rotation des éléments de conformation 21 se poursuit jusqu'à ce que les extrémités coudées 25 se trouvent sensiblement en dessous de l'appui dorsal 15, c'est-à-dire sur l'arrière de la volaille 4, et aient effectué une rotation d'environ 360° par rapport aux figures 1a et 1b. Comme le montrent les figures 4a et 4b, les ailes se trouvent alors pliées et tordues de manière que les ailerons soient en arrière des parties proximales, sur le dos de la volaille, position dans laquelle les ailes se bloquent d'elles-mêmes. Il suffit alors, pour libérer la volaille 4 des éléments de conformation 21, d'imprimer à ces derniers une rotation supplémentaire d'environ 90° pour que les extrémités coudées 25 se dégagent d'elles-mêmes des ailes qui restent en position bloquée sur le dos de la volaille.

La volaille 4 à ailes conformées quitte ensuite le carrousel 1 en étant toujours suspendue au transporteur et l'unité de conformation 7 est alors ramenée à la position de réception suivant les figures 1a et 1b. A cet effet, pendant la rotation ultérieure du carrousel 1, on imprime d'abord aux éléments de conformation 21 un mouvement de translation radialement vers l'extérieur, à l'aide de la rainure de came 31 et du galet suiveur de came 30, et un mouvement de rotation en sens contraire, en faisant descendre la crémaillère 27 à l'aide de la rainure de came 29 et du galet suiveur de came 28, avant de faire basculer la tête 16 pour incliner de nouveau les éléments de conformation 21 vers le bas et vers l'extérieur à l'aide de la rainure de came 19 et du suiveur de came 18, les galets 28 et 30 quittant alors leurs rainures de came 29, 31. Après un tour complet du carrousel 1, l'unité de conformation 7 se retrouve ainsi à la position selon la figure 1a.

Il va de soi que le mode de réalisation représenté et décrit n'a été donné qu'à titre illustratif et non limitatif et que de nombreuses modifications et variantes sont possibles dans le cadre de l'invention comme décrit dans les revendications. Ainsi, la ou chaque unité de conformation pourrait également être montée mobile en synchronisme avec le transporteur sur un support autre qu'un carrousel. De plus, la conformation des ailes des volailles pourrait également se faire à l'arrêt au lieu de se faire pendant l'avancement du transporteur, mais il faudrait dans ce cas prévoir des commandes des différents mouvements par des moyens autres que des cames. Par ailleurs, même sur un carrousel, la ou chaque unité de conformation pourrait être commandée par des moyens autres que des cames.

Dans l'exemple représenté et décrit, chaque élément de conformation 21 présente une extrémité libre coudée à environ 90°, cette extrémité coudée étant par ailleurs conformée en palette, c'est-à-dire avec une largeur supérieure à l'épaisseur. Cependant, il y a lieu de noter que l'angle de l'extrémité libre coudée de chaque élément de conformation et la forme particulière de cette extrémité ainsi que son éventuel déport latéral peuvent être modifiés en vue d'une adaptation optimale aux volailles à traiter et en particulier à la température des volailles. En effet, le volailles sont plus ou moins malléables et souples selon leur température (conformation à chaud, immédiatement après abattage, ou à froid, après ressuage, c'est-à-dire conservation en chambre froide). Il convient de remarquer à ce sujet que l'aptitude de l'installation conforme à l'invention au traitement de volailles froides, chaudes ou tièdes n'était à priori pas évidente, compte tenu des différences de comportement des volailles en fonction de la température, ce qui est particulièrement sensible lors de la conformation manuelle de volailles de températures différentes. Enfin, l'appui dorsal (15) peut être de préférence réglable en position radialement et/ou en inclinaison par rapport à la verticale, notamment en fonction de la morphologie des volailles.

## Revendications

1. Procédé pour la conformation des ailes de volailles, après abattage, plumage et éviscération, consistant à tordre et plier les ailes pour les amener et les bloquer sur le dos des volailles, caractérisé par le fait qu'on amène chaque volaille suspendue par les pattes, les ailes libres étant naturellement écartées du corps, au-dessus de deux éléments de conformation sensiblement parallèles, espacés horizontalement, formés chacun d'une tige sensiblement horizontale munie d'une partie coudée à son extrémité libre, de telle manière que le bras de chaque aile vienne se placer sur la tige, en arrière de l'extrémité libre coudée qui dépasse vers le côté ventral de la volaille en étant tournée vers le haut, on imprime ensuite aux éléments de conformation un mouvement combiné de translation suivant les axes des tiges depuis le côté ventral vers le côté dorsal de la volaille et de rotation d'au moins 360° des extrémités coudées vers l'extérieur autour des axes des tiges tout en maintenant le corps de la volaille en position par application dorsale du corps contre un appui, de manière que les extrémités coudées des tiges saisissent les avant-bras des ailes et fassent subir aux ailes un mouvement combiné de torsion et de pliage et de recul pour les amener et les bloquer sur le dos de la volaille.

2. Procédé suivant la revendication 1, caractérisé par le fait qu'on décale les extrémités libres coudées des tiges des deux éléments de conformation angulairement l'une par rapport à l'autre autour des axes des tiges de manière que l'extrémité libre coudée de l'une des tiges soit toujours légèrement en avant sur l'autre dans son mouvement de rotation.

3. Procédé suivant la revendication 1 ou 2, caractérisé par le fait qu'on imprime aux éléments de conformation, à la suite du mouvement de rotation d'environ 360°, un mouvement de rotation supplémentaire d'environ 90° pour dégager les extrémités libres coudées des éléments de conformation des ailes bloquées sur le dos de la volaille.

4. Installation pour la conformation des ailes de volailles après abattage, plumage et éviscération, caractérisée par le fait qu'elle comprend, associée à un transporteur (3) auquel les volailles (4) à conformer sont suspendues par les pattes, au moins une unité de conformation (7) comprenant :
   – un appui dorsal (15) pour une volaille à conformer,
   – deux éléments de conformation (21) espacés horizontalement, formés chacun d'une tige (22) sensiblement horizontale munie d'une partie coudée (25) à son extrémité libre, lesdits deux éléments de conformation étant situés de part et d'autre et en dessous dudit appui dorsal (15),
   – des moyens de commande (30, 31) pour animer lesdits éléments de conformation d'un mouvement de translation (23) suivant l'axe de leur tige entre une position avant dans laquelle les extrémités coudées se trouvent à distance en avant de l'appui dorsal et une position arrière dans laquelle les extrémités coudées se trouvent sensiblement en dessous de l'appui dorsal, et
   – des moyens de commande (26, 27, 28, 29) pour imprimer auxdits deux éléments de conformation, en superposition au mouvement de translation, un mouvement de rotation (24) en sens opposés autour des axes des tiges sur un angle d'au moins 360° de manière que les extrémités coudées des tiges s'écartent l'une de l'autre au-dessus des axes des tiges et se rapprochent l'une de l'autre en dessous des axes des tiges.

5. Installation suivant la revendication 4, caractérisée par le fait que la ou chaque unité de conformation (7) est montée mobile en synchronisme avec le transporteur (3) auquel sont suspendues les volailles.

6. Installation suivant la revendication 4 ou 5, caractérisée par le fait que plusieurs unités de conformation (7) sont montées sur un carrousel (1), les axes des tiges (22) des éléments de conformation étant orientés radialement, et que le transporteur (3) auquel sont suspendues les volailles suit un trajet en arc de cercle à l'endroit dudit carrousel.

7. Installation suivant l'une quelconque des revendications 4 à 6, les volailles étant suspendues au transporteur (3) par des balancelles (5), caractérisée par le fait que la ou chaque unité de conformation (7) comprend des moyens de commande réglables (10, 11, 12, 13) pour soulever la balancelle de chaque volaille à conformer de manière à amener la volaille à la hauteur correcte par rapport à l'appui dorsal (15) et aux éléments de conformation (21), indépendamment de la taille des volailles.

8. Installation suivant l'une quelconque des revendications 4 à 7, caractérisée par le fait que les éléments de conformation (21) sont montés mobiles en hauteur et la ou chaque unité de conformation (7) comprend des moyens de commande (18, 19) pour soulever ces éléments de conformation après mise en place d'une volaille contre l'appui dorsal et pour abaisser les éléments de conformation après conformation de cette volaille, avant la mise en place de la volaille suivante.

9. Installation suivant la revendication 8, caractérisée par le fait que les éléments de conformation (21) de chaque unité de conformation (7) sont disposés sur une tête (16) montée pivotante autour d'un axe horizontal (17) perpendiculaire aux axes des tiges des éléments de conformation, et que des moyens de commande (28, 19) sont prévus pour faire pivoter la tête en va-et-vient (20) autour dudit axe.

10. Installation suivant l'une quelconque des revendications 4 à 9, caractérisée par le fait que les moyens de commande (12, 13; 18, 19; 28, 29; 30, 31) sont constitués par des cames fixes et par des éléments suiveurs de came montés sur les éléments à commander.

11. Installation suivant l'une quelconque des revendications 4 à 10, caractérisée par le fait que les moyens de commande pour imprimer aux éléments de conformation un mouvement de rotation en sens opposés comprennent deux pignons (26) traversé par les tiges (22) des deux éléments de conformation (21), ces deux pignons se trouvant en prise avec les dents opposées d'une crémaillère (27) double passant entre les deux pignons et portant à son extrémité inférieure un galet suiveur de came (28).

## Claims

1. Method for shaping the wings of poultry after slaughtering, plucking and disembowelling, consisting of twisting and folding the wings in order to guide them onto the back of the piece of poultry and to lock them there, characterized in that each piece of poultry hung-up at the legs, the wings of which naturally freely unfold from the body, is guided above two essentially parallel elements being disposed at a certain horizontal distance from one another, each of which consists of a substantially horizontally disposed rod bent-up at the free end of which, so that the arm of each wing is to lay upon said part the free end of which is bent up, such part protruding in the direction toward the belly of the poultry and being turned upward, subsequently said shaping elements being moved in a combined translational movement in direction of the rod axis from the belly side of the poultry to the back side of the poultry, and a rotary motion of the said bent outer ends around at least 360° toward the outside around the rod axes, so that the body of the poultry maintaining its position is pressed with its back against an abutment piece, and so the said bent-up outer parts of said rods grip the forearms of the wings and lead the wings in a combined torsional, folding and retracting movement toward the back of the poultry and lock them there.

2. Method according to claim 1, characterized in that the free bent-up ends of the said rods of the two shaping elements are somewhat rotated around the rod axes with respect to one another so that the bent-up free end of the one rod always slightly precedes the other one in its rotary movement.

3. Method according to claim 1 or 2, characterized in that the said shaping elements are rotated by approximately another 90° after the above rotary movement around approximately 360° in order to free the bent-up ends of the said shaping device from the wings locked upon the back of the poultry.

4. Device for shaping the wings of poultry after slaughtering, plucking and disembowelling same, characterized in that it is provided, in association with a conveyor device (3) from which the pieces of poultry are suspended at their legs, with at least one shaping unit (7) which consists of the following parts:
   - a back abutment (15) against which the back of the poultry abuts;
   - two shaping elements (21) disposed horizontally at a certain distance between them, consisting each of an essentially horizontally disposed rod (22) which is provided at its free end with a bent-up section (25), said two shaping elements being disposed at the two sides of the above back abutment (15) and lower than same;

– drive means (30, 31) for leading said shaping elements in a horizontal translational movement (23) along the respective rod axis from a front position in which the said bent-up outer sections are in a position distant from the said back abutment (15), into a back position in which the said bent-up outer sections are substantially under the said back abutment (15), and

– drive means (26, 27, 28, 29) in order to rotate the said shaping elements in superposition with the translational movement in a rotational movement (24) in opposite rotation around the rod axes by at least 360° so that the said bent-up rod ends move away from one another when they are above the rod axes and approach one another when they are below the rod axes.

5. Device according to claim 4, characterized in that therespectively each - shaping unit (7) is in synchronism movable mounted to the said conveyor device (3) on which the pieces of poultry are suspended.

6. Device according to claim 4 or 5, characterized in that a plurality of shaping units (7) is mounted upon a rotary platen (1), that the axes of the rods (22) of the shaping elements are radially directed, and that the conveyor device (3) on which the pieces of poultry are suspended follows a path in form of an arc of circle at the place of said rotary platen.

7. Device according to any one of claims 4 to 6, said pieces of poultry being suspended on conveyor balancing mechanisms (5) of the conveyor device (3), characterized in that the, respectively each, shaping unit (7) is provided with adjustable drive means (10, 11, 12, 13) for raising the various conveyor balancing mechanisms (5) carrying the piece of poultry to be shaped, so that the piece of poultry is conducted in the correct height as regards the back abutment (15) and the shape elements (21) independently of the size of the various pieces of poultry.

8. Device according to anyone of the claims 4 to 7, characterized in that said shaping elements (21) are mounted movable as to height, and the - respectively each - shaping unit (7) contains drive means (18, 19) for raising said shaping units after abutting a piece of poultry against the back abutment, and for lowering said shaping elements after the shaping of said piece of poultry and prior to the abutment of the next piece of poultry.

9. Device according to claim 8, characterized in that said shaping elements (21) of each shaping unit (7) are disposed upon a head (16) which is tiltable around a horizontal axis (17) perpendicularly with respect to the rods of the shaping elements, and that drive means (28, 19) are provided which tilt the said head back and forth (20) around said axis.

10. Device according to anyone of claims 4 to 9, characterized in that said drive means (12, 13; 18, 19; 28, 29; 30, 31) consist of fixed cams and cam followers mounted upon said elements to be driven.

11. Device according to anyone of claims 4 to 10, characterized in that said drive means for driving the shaping elements in opposite motions contain two pinions (26) through which the rods (22) of the shaping elements (21) pass, said two pinions meshing with the teeth of the two opposite sides of a double face toothed rack (27) passing between the two pinions and being provided with a cam follower roll (28) at its lower end.

**Patentansprüche**

1. Verfahren zum Formen der Flügel von Geflügel nach dem Schlachten, Rupfen und Ausnehmen, das darin besteht, daß man die Flügel verdreht und faltet, um sie auf den Rücken des Geflügels zu führen und dort festzuklemmen, dadurch gekennzeichnet, daß man jedes an den Beinen aufgehängte Geflügelstück, dessen Flügel natürlich frei vom Körper abgespreizt sind, über zwei im wesentlichen parallele und waagrecht beabstandete Elemente führt, die jeweils aus einem im wesentlichen waagrecht angeordneten Stab bestehen, der am freien Ende abgewinkelt ist, so daß jeder Flügel mit dem Arm hinter dem am freien Ende abgewinkelten Teil, der gegen den Geflügelbauch zu vorsteht und nach oben gedreht ist, auf den Stab zu liegen kommt, man anschließend die Formelemente in eine kombinierte Schubbewegung in Richtung der Stabachse von der Bauchseite des Geflügels in Richtung zur Rückenseite des Geflügels zu, und Drehbewegung der abgewinkelten äußeren Enden um mindestens 360° nach außen um die Stabachsen versetzt, so daß der Körper des Geflügels unter Beibehaltung seiner Lage mit dem Rücken an eine Anlage gedrückt wird, und so die abgewinkelten äußeren Teile der Stäbe die Vorderarme der Flügel fassen und die Flügel in einer kombinierten Dreh-, Falt- und Rückziehbewegung zum Rücken des Geflügels führen und dort festklemmen.

2. Verfahren gemäß Anspruch 1, dadurch gekennzeichnet, daß man die freien abgewinkelten Enden der Stäbe der beiden Formelemente im Drehwinkel etwas um die Stabachsen gegeneinander verdreht, so daß das abgewinkelte freie Ende des einen Stabs in seiner Drehbewegung immer leicht vor dem anderen kommt.

3. Verfahren gemäß Anspruch 1 oder 2, dadurch gekennzeichnet, daß man die Formelemente nach der Drehbewegung um etwa 360° um weitere etwa 90° dreht, um die freien abgewinkelten Enden der Formvorrichtung wieder aus den auf dem Geflügelrücken festgeklemmten Flügeln zu lösen.

4. Vorrichtung zum Formen der Flügel von Geflügel nach dem Schlachten, Rupfen und Ausnehmen, dadurch gekennzeichnet, daß sie, zugehörig zu einer Fördervorrichtung (3), an der die Geflügelstücke (4) mit den Beinen aufgehängt sind, wenigstens eine Formeinheit (7) aufweist, die aus folgenden Teilen besteht:

– eine Rückenanlage (15), an die der Rücken des zu formenden Geflügels angelegt wird;

– zwei waagrecht im Abstand angeordnete Formelemente (21), die aus jeweils einem im wesentlichen waagrecht angeordneten Stab (22) bestehen, der an seinem freien Ende mit einem abgewinkelten Teil (25) versehen ist, wobei diese zwei Formelemente auf jeweils einer Seite dieser Rückenanlage (15) und tiefer als diese angeordnet sind;

– Antriebsmittel (30, 31), um diese Formelemente in einer waagrechten Schubbewegung (23) entlang der jeweiligen Stabachse von einer vorderen Stellung, in der sich die abgewinkelten äußeren Teile im Abstand zur Rückenanlage (15) befinden, in eine hintere Stellung, in der sich die abgewinkelten äußeren Teile im wesentlichen unter der Rückenanlage (15) befinden, zu führen und

– Antriebsmittel (26, 27, 28, 29), um diese zwei Formelemente in Überlagerung zur Schubbewegung in einer Drehbewegung (24) in gegenläufiger Richtung um die Stabachsen um mindestens 360° zu drehen, so daß sich diese abgewinkelten äußeren Enden der Stäbe oberhalb den Stabachsen voneinander entfernen und unterhalb der Stabachsen wieder einander nähern.

5. Vorrichtung gemäß Anspruch 4, dadurch gekennzeichnet, daß die bzw. jede Formeinheit (7) an der Fördervorrichtung (3) synchron beweglich montiert ist, an der die Geflügelstücke aufgehängt sind.

6. Vorrichtung gemäß Anspruch 4 oder 5, dadurch gekennzeichnet, daß mehrere Formeinheiten (7) auf einem Karussell (1) montiert sind, daß die Achsen der Stäbe (22) der Formelemente radial ausgerichtet sind, und daß die Fördervorrichtung (3), an der die Geflügelstücke aufgehängt sind, am Ort des Karussells einen kreisbogenförmigen Weg beschreibt.

7. Vorrichtung gemäß einem beliebigen der Ansprüche 4 bis 6, wobei die Geflügelstücke an den Transportrollen (5) der Fördervorrichtung (3) aufgehängt sind, dadurch gekennzeichnet, daß die bzw. jede Formeinheit (7) regelbare Antriebsmittel (10, 11, 12, 13) zum Heben der einzelnen Transportrollen (5) mit dem zu formenden Geflügelstück aufweist, so daß das Geflügelstück in die richtige Höhe in Bezug auf die Rückenanlage (15) und die Formelemente (21) geführt wird, und zwar unabhängig von der Größe der einzelnen Geflügelstücke.

8. Vorrichtung gemäß einem beliebigen der Ansprüche 4 bis 7, dadurch gekennzeichnet, daß die Formelemente (21) höhenbeweglich montiert sind und die bzw. jede Formeinheit (7) Antriebsmittel (18, 19) enthält zum Anheben dieser Formeinheiten nach dem Anlegen eines Geflügelstücks an der Rückenanlage, und zum Absenken der Formelemente nach dem Formen dieses Geflügelstücks und vor dem Aufbringen des nächsten Geflügelstücks.

9. Vorrichtung gemäß Anspruch 8, dadurch gekennzeichnet, daß die Formelemente (21) jeder Formeinheit (7) auf einem Kopf (16) angeordnet sind, der um eine waagrechte Achse (17) senkrecht zu den Achsen der Stäbe der Formelemente schwenkbar montiert ist, und daß Antriebsmittel (28, 19) vorgesehen sind, die den Kopf in Hin- und Herbewegung (20) um diese Achse schwenken.

10. Vorrichtung gemäß einem beliebigen der Ansprüche 4 bis 9, dadurch gekennzeichnet, daß die Antriebsmittel (12, 13; 18, 19; 28, 29; 30, 31) aus feststehenden Nocken und den auf die anzutreibenden Elemente montierten Exzenterrollen bestehen.

11. Vorrichtung gemäß einem beliebigen der Ansprüche 4 bis 10, dadurch gekennzeichnet, daß die Antriebsmittel zum Antrieb der Formelemente in gegenläufiger Drehbewegung zwei Ritzel (26) enthalten, durch die die Stäbe (22) der zwei Formelemente (21) geführt sind, wobei diese zwei Ritzel in den einander gegenüberliegenden Zähnen einer doppelseitigen Zahnstange (27) kämmen, die zwischen diesen beiden Ritzeln läuft und an ihrem unteren Ende eine Nockenfolgerolle (28) aufweist.

FIG.1a

FIG.1b

FIG. 2a

FIG. 2b

FIG. 3a

FIG. 3b

FIG. 4a

FIG. 4b

EP 0 350 399 B1